# EUROPÄISCHE PATENTSCHRIFT

(11) **EP 2 934 922 B1**
(45) Veröffentlichungstag und Bekanntmachung des Hinweises auf die Patenterteilung: **11.01.2017**
(21) Anmeldenummer: 13791753.0
(22) Anmeldetag: 30.10.2013
(51) Int. Cl.: B60C 11/16

(54) **SPIKE**
SPIKE
CRAMPON

(30) Priorität: 19.12.2012 DE 102012112658
(43) Veröffentlichungstag der Anmeldung: 28.10.2015
(73) Patentinhaber: Continental Reifen Deutschland GmbH, 30165 Hannover (DE)
(72) Erfinder: SCHLITTENHARD, Jan, 30900 Wedemark (DE); RYYPPÖ, Miiro, FI-40800 Vajakoski (FI); RAUTIAINEN, Juha, FI-40520 Jyväskylä (FI)
(74) Vertreter: Finger, Karsten
(86) Internationale Anmeldenummer: PCT/EP2013/072660
(87) Internationale Veröffentlichungsnummer: WO 2014/095138

(56) Entgegenhaltungen:
- EP-A1- 2 402 178
- EP-A2- 1 798 068
- WO-A1-2012/117962
- WO-A2-00/41901
- US-A1- 2004 231 775

## Beschreibung

Die Erfindung betrifft einen Spike, welcher in ein Spikeloch im Laufstreifen eines Fahrzeugluftreifens eingebracht wird, und einen im Spikeloch gehaltenen und über das Spikeloch bzw. die Laufstreifenoberfläche vorstehenden Spikepin aufweist.

Derartige Spikes sind bekannt und bestehen üblicherweise aus einem Spikekörper und aus einem Spikepin. Der Spike wird üblicherweise im Spikeloch des Laufstreifens eines Fahrzeugluftreifens eingebracht. Dabei wird der Spikekörper im Spikeloch gehalten. Im Spikekörper ist üblicherweise ein Spikepin befestigt, welcher sich mit seiner Spikespitze über das Spikeloch und somit über die Laufstreifenoberfläche hinaus nach außen aus dem Reifen erstreckt und hierdurch beim Abrollen den Griff zum Eis und zum Schnee bewirkt. Beim Abrollen auf der Straße unterliegt der Reifen, die Spikespitze und die Straßenoberfläche dabei Abrieb.

Die Spikekörper sind dabei häufig zur Erzielung eines sicheren Halts durch Verankerung im Spikeloch im Laufstreifenprofil des Reifens mit mehreren unterschiedlichen Flanschen ausgebildet. Es ist bekannt Spikekörper aus Aluminium, aus Stahl oder aus Plastik herzustellen.

Der für den Eisgriff wichtige Überstand des Spikepins, d. h. der Erstreckungsbereich, mit welchem sich der Spikekopf über die Oberfläche des Spikelochs bzw. die Laufstreifenoberfläche hinaus erstreckt, wird üblicherweise zur Erzielung eines optimalen Eisgriffs auf eine Erstreckungslänge von 1 bis1,5 mm eingestellt. Beim Abrollen auf trockener, nicht eisbedeckter Straße unterliegen sie hierbei einem Abrieb. Um die Verschleißfestigkeit zu erhöhen ist es bekannt, die Spikepins pulvermetallurgisch durch pressen herzustellen und anschließend zu sintern. Derartige Spikepins sind jeweils als ein über ihre gesamte Erstreckung aus einer einzigen pulvermetallurgischen Mischung gesinterter Hartmetallpin ausgebildet, welcher dann über einen Kegelpresssitz im Spikekörper verankert wird. Die verschiedenen unterschiedlichen Spikepintypen bestehen dabei aus aufwendigen pulvermetallurgischen Mischungen, die u. a. Wolframcarbid, Titancarbid und Kobalt in unterschiedlichen Mischungsverhältnissen, Korngrößen und Porositäten enthalten können. Es ist bekannt, derartige Spikepins in runder und in nicht runder Schnittform auszubilden, wobei all diesen Spikepintypen - unabhängig von ihrer Form - gemein ist, dass sie von einem bis zum anderen Spikeerstreckungsende jeweils aus dem gleichen Hartmetall bestehen. Der Vorteil dieser aus Hartmetall betehenden Spikepins besteht in ihrer hohen Verschleißfestigkeit. Damit die Spikes sicher im Reifen gehalten werden können, benötigen sie jedoch auch eine entsprechend große Erstreckungslänge innerhalb des Reifens, der so genannten Einbettungslänge (Einpresstiefe). Die Einbettungslänge ist dabei von den von für die jeweiligen Spikereifen individuell geforderten Erfordernissen und den während ihres Lebens einwirkenden Kräften abhängig. Derartige pulvermetallurgische Hartmetallmischungen bringen ein hohes spezifisches Gewicht für den Spikepin mit sich. Dies führt bei derartig ausgebildeten Spikepins zu einer hohen Spikemasse und zur Erzielung einer gewünschten hohen Verschleißfestigkeit. Es ist jedoch bekannt, dass die Spikemasse ein wesentlicher Faktor bei der Straßenschädigung ist.

Ein Fahrzeugluftreifen unterliegt während seines Lebens des Verschleißes, welcher sich in abnehmender Profiltiefe äußert. Um einen sicheren Griff des Spikes und somit des Fahrverhaltens auf winterlichen Fahrbahnen zu sichern, darf der Spikeüberstand über die Reifenoberfläche jedoch ein gewisses Mindestmaß nicht unterschreiten. Wird der Überstand jedoch zu groß, ist der sichere Spikesitz im Reifen nicht mehr gesichert. Damit sowohl der sichere Griff als auch der sichere Sitz über die Lebensdauer des Reifens ausreichend lange gesichert werden kann, wäre es daher wünschenswert, wenn der Spike eine ähnliche Verschleißgeschwindigkeit wie der Reifen aufweist. Hierzu wäre es sinnvoll, wenn sich beim Abrieb die Gesamterstreckungslänge des Spikes, die Erstreckungslänge des Spikekörpers und die Erstreckungslänge des Spikepins - jeweils gemessen in radialer Richtung des Reifens - gleichmäßig verkürzen. Damit verkürzt sich jedoch auch die für die Spikepinhaltung ausschlaggebende Einpresstiefe im Spikekörper mit, welche bei den üblicherweise kegelförmig eingepressten Spikes die Kegelpresssitzlänge bildet. Die Haltewirkung wird somit reduziert.

Es ist bekannt, dass ein Spikepin bei der Übertragung von Brems- und Antriebskräften aus seiner Verankerung gerissen wird, wenn im noch vorhandenen Spikekörper die kritische Einpresstiefe des Spikepins unterschritten wird. Bei den herkömmlichen Spikes mit gesintertem Hartmetall-Spikepin kommt somit dieser unterhalb der kritischen Einpresstiefe im Spikekörper befindliche Teil des Spikepins nicht in den Wirkkontakt zur Straßenoberfläche, wodurch seine hoch abriebbeständigen Materialeigenschaften gar nicht benötigt werden. Dieser Erstreckungsbereich dient ausschließlich der Verankerung des Spikepins im Reifen. Seine hohe Dichte und sein großes Gewicht kommen jedoch für die Straßenbeschädigungen voll zum Tragen.

Es ist darüber hinaus bekannt, Spikes mit Spikekörpern aus Plastik mit geringerem Gewicht auszubilden und hierdurch einen verringerten Straßenabrieb zu erzielen. Derartige Ausbildungen haben jedoch den Nachteil, dass sie eine deutlich geringere Verschleißfestigkeit gegenüber auf winterlichen Straßen häufig ausgestreutem Streusand und Splitt aufweisen und materialbedingt ein geringeres Spikepinhaltevermögen aufweisen. Um diesem Effekt entgegenzuwirken muss dann wiederum ein deutlich längerer und damit noch schwererer Hartmetallpin eingesetzt werden, was die Gewichtseinsparungen durch den Spikekörper und damit den Straßenabriebvorteil zumindest teilweise kompensiert.

Aus der WO 00/41901 ist ein Spike gemäß den Merkmalen der Oberbegriffs von Anspruch 1 bekannt.

Der Erfindung liegt daher die Aufgabe zugrunde in einfacher Weise bei Fahrzeugreifen mit Spikes sowohl geringen Abrieb der Straße durch Spikes als auch gutes, sicheres Haften des Spikes im Reifen und somit ein gutes Winterverhalten zu ermöglichen.

Die Aufgabe wird erfindungsgemäß durch die Ausbildung eines Spikes, welcher in ein Spikeloch im Laufstreifen eines Fahrzeugluftreifens eingebracht wird, und einen im Spikeloch gehaltenen und über das Spikeloch bzw. die Laufstreifenoberfläche vorstehenden Spikepin aufweist, gemäß den Merkmalen von Anspruch 1 gelöst, bei der der Spikepin längs seiner Erstreckung aus wenigstens einem oberen, die Spikespitze bildenden Erstreckungsbereich, welcher zumindest den über das Spikeloch bzw. die Laufstreifenoberfläche vorstehenden Teil des Spikepins umfasst, und aus einem unteren Erstreckungsbereich besteht, wobei der Spikepin im oberen Erstreckungsbereich aus einem ersten, pulvermetallurgisch hergestellten oder gesinterten Material und im unteren Erstreckungsbereich aus einem zweiten pulvermetallurgisch hergestellten oder gesinterten Material besteht, wobei das erste Material eine höhere Abriebfestigkeit und eine höhere Dichte aufweist als das zweite Material, **wobei der Spikepin zwischen dem oberen und dem unteren Erstreckungsbereich einen dritten Erstreckungsbereich aufweist, in welchem der Spikepin aus einem dritten Material besteht, welches eine geringere Dichte aufweist als das erste Material und eine höhere als das zweite Material.**

Durch diese Ausbildung kann die Masse des Spikepins und somit die Spikemasse deutlich reduziert werden, bei gleichzeitiger Erzielung hoher Abriebbeständigkeit des Spikes in dem für die Griffwirkung wesentlichen äußeren Erstreckungsbereich im Reifen und bei Sicherstellung einer relativ großen Erstreckungslänge des Spikes innerhalb des Reifens, wodurch eine optimale Spikepinhalterung ermöglicht wird. Verbesserte Wintereigenschaften können so trotz Reduktion von Straßenbeschädigungen ermöglicht werden.

Gerade bei Spikes mit Spikekörpern aus Plastik oder Aluminium kann durch diese Ausbildung des Spikes der Gewichtsvorteil der Materialien optimal genutzt werden, da auch mit den für diese Spikekörper erforderlichen besonders langen Ausbildungen der Spikepins der Spikepin den Gewichtsvorteilen der Spikekörper aus Plastik oder Aluminium kaum noch entgegenwirkt.

Die Zwischenschicht reduziert den Unterschied in den Materialeigenschaften in den benachbarten Schichten und vermindert so die Spannungen in den Verbindungsebenen. Eine solche Ausführung ist besonders vorteilhaft, wenn die Materialien des oberen und des unteren Erstreckungsbereich, sehr unterschiedliche Materialeigenschaften und damit sehr unterschiedliches Sinterverhalten aufweisen. Ein solcher "sprunghafter" Wechsel der Materialeigenschaften könnte zu Spannungen und möglicherweise zu Rissen in der Verbindungsebene zwischen den verschiedenen Materialien führen, was durch diese Ausbildung einfach und zuverlässig verhindert werden kann.

Besonders vorteilhaft ist die Ausbildung eines Spikes gemäß den Merkmalen von Anspruch 2, welcher einen im Spikeloch gehaltenen Spikekörper mit einem Oberflansch, einem Fußflansch und einem den Oberflansch mit dem Fußflansch verbindenden - insbesondere taillierten - Mittelteil aufweist, in welchem der Spikepin angeordnet ist. Durch die Ausführung mit zwei Flanschen und einem verbindenden schlankeren Mittelteil kann der Zielkonflikt Eisperformance - Spikehaltung auf ein höheres Niveau angehoben werden. Der größere Durchmesser des Oberflansches bewirkt eine größere Verspannung des umliegenden Gummimaterials, das bei einer schnellen, hochfrequenten Anregung deutlich mehr verstrammt und damit steifer reagiert. Dies bewirkt, dass der Spike sich unter einer solchen Belastung weniger stark verkippt und somit einen für den Eisgriff vorteilhafteren Winkel einnimmt. Das schlanke Mittelteil ermöglicht der, den Spike umschließenden Gummimischung eine großflächige Auflage auf dem Unterflansch, was die Spikehaltung im Reifen deutlich erhöht. Zum anderen können Spikepins aus mehreren Materialien, bei gleichem Durchmesser,gleicher Geometrie und gleichem Konus und einem vergleichbaren Gesamtgewicht, wie konventionell hergestellte Spikepins, hergestellt werden, weisen jedoch eine größere Gesamtpinlänge (L) auf. Solche Spikes weisen bei gleicher Straßenbelagsschädigung eine deutlich verbesserte Spikepinhaltung im Spikekörper auf. Dieses verbessert zusätzlich die Eisgriffeigenschaften der Spikes, besonders bei hohen Reifen- bzw. Spikeverschleißraten zum Ende des Reifenlebens.

Besonders vorteilhaft ist die Ausbildung eines Spikes gemäß den Merkmalen von Anspruch 3, wobei der zweite Erstreckungsabschnitt mit einer Erstreckungshöhe h₂ mit (0,10L)≤ h₂≤(0,65L) - insbesondere mit h₂≤(0,5L) - ausgebildet ist, wobei L die Erstreckungshöhe des Spikepins ist. Dies ermöglicht eine einfache Ausbildung mit geringem Gewicht bei hoher Verschleißfestigkeit und guter Halterung des Spikepins, wodurch gute Wintereigenschaften bei geringem Verschleiß von Straße und Spike begünstigt werden.

Besonders vorteilhaft ist die Ausbildung eines Spikes gemäß den Merkmalen von Anspruch 4, wobei das erste Material und das zweite Material innig - insbesondere pulvermetallurgisch oder sintertechnisch - miteinander verbunden sind. Hartmetallspikepins werden pulvermetallurgisch oder sintertechnisch hergestellt. Durch die innige Verbindung kann einfach und zuverlässig verhindert werden, dass sich die Schichten voneinander trennen. Hierdurch kann somit in zuverlässiger Weise die Erfüllung der Funktion des Spikepins während des Einsatzes gesichert werden. Die innige Verbindung kann besonders zuverlässig durch pulvermetallurgische oder sintertechnische Verbindung erzielt werden.

Besonders vorteilhaft ist die Ausbildung eines Spikes gemäß den Merkmalen von Anspruch 5, wobei der dritte Erstreckungsbereich mit einer Erstreckungshöhe h₃ und der zweite Erstreckungsabschnitt mit einer Erstreckungshöhe h₂ mit h₃ ≤ h₂ ausgebildet ist. Eine solche Ausführung ermöglicht eine Optimierung der Zielkonflikte Gewichtseinsparung gegen Verschleißfestigkeit einerseits sowie Gewichtseinsparung gegen Herstellbarkeit andererseits.

Besonders vorteilhaft ist die Ausbildung eines Spikes gemäß den Merkmalen von Anspruch 6, wobei der Spikepin zur Einbettung im Reifen mit einer längs der Erstreckungshöhe gemessenen Einbettungslänge h₁ mit (0,65 L)≤h₁≤ (0,9 L) - insbesondere mit (0,75 L)≤h₁≤ (0,85 L) - ausgebildet ist. Mit einer derartigen Auslegung kann einfach sichergestellt werden, dass die Einbettungslänge h₁ einen ausreichenden großen Anteil der Gesamterstreckungshöhe L des Spikepins für eine sichere Verankerung desselbigen im Reifen erhält, was eine besonders sichere Verankerung des Spikepins über die Lebensdauer des Reifens begünstigt.

Die Erfindung betrifft ferner einen Fahrzeugluftreifen mit einem Laufstreifen, in welchem erfindungsgemäß ausgeführte Spikes verankert sind. Somit weisen Fahrzeugluftreifen, gemäß der Erfindung, Spikes mit hoher Abriebbeständigkeit in dem dem Abrieb auf der Straße unterliegenden äußeren Erstreckungsbereich und mit geringem Gewicht im inneren im Wesentlichen zur Verankerung dienenden Erstreckungsbereich auf, sodass auch bei hoher Kraftübertragung mit geringem Abrieb auf der Straße ein Verlust der Spikes während des gesamten Reifenlebens wirkungsvoll vermieden und gute Wintereigenschaften erzielt werden können. Mit einer solchen erfindungsgemäßen Auslegung kann der Zielkonflikt zwischen gutem Wintergriff einerseits und guter Pinverankerung und Lebensdauer andererseits auf ein höheres Niveau angehoben werden. Um die in mehrereren Ländern vorgegebene Spikegewichtslimitierung für PKW-Spikes einfach umsetzen zu können, kann ein definiertes Volumen an Spike-Körpermaterial sowie ein gewisses Volumen an konventionellem Pinmaterial eingesetzt werden. Je nach gewählter Auslegung können diese dabei zwischen den verschiedenen Spiketypen unterschiedlich sein. Bei gleichem Volumen des eingesetzten Pinmaterials können so viele verschiedene Pin-Designvarianten mit unterschiedlicher individueller Auslegung zur Lösung des Zielkonflikts Wintergriff gegen Pinverankerung / Lebensdauer umgesetzt und eingesetzt werden, wie zum Beispiel schlanke und lange Ausbildung für guten Wintergriff mit besonders hoher Lebensdauer oder eine breite und kurze Ausbildung für gesonders guten Wintergriff mit guter Lebensdauer.

Die Erfindung wird im Folgenden an Hand der in den Figuren 1 bis 8 dargestellten Ausführungsbeispiele näher erläutert. Hierin zeigen
- Fig.1: eine Draufsicht auf einen Abschnitt eines Laufstreifenprofils eines PKW-Fahrzeugluftreifens mit eingesetztem rundem Spike,
- Fig.2: eine Querschnittdarstellung des Fahrzeugluftreifens in Schnittdarstellung gemäß Schnitt II-II von Fig.1,
- Fig.3: eine Darstellung des Spikes von Fig.2 zur Erläuterung des Spikeaufbaus mit einer alternativen Außenkontur des Spikekörpers,
- Fig.4: die Querschnittdarstellung eines Spikes analog der Darstellung von Fig.2 mit alternativer Ausbildung Spikepins,
- Fig.5: eine Ausbildung eines Spikes in erfindungsgemäßer Ausbildung in einer Querschnittdarstellung analog zur Darstellung von Fig.3,
- Fig.6: eine erfindungsgemäße Ausbildung eines Spikes in Querschnittdarstellung,
- Fig.7: Querschnittdarstellung eines Spikes gemäß der Ausbildung von Fig. 6 mit alternativer Ausbildung des Spikepins und
- Fig.8: Darstellung eines Spikes mit einem Spikekörper mit einfachem Flansch in Fig.8a und mit einem Spikekörper mit mehreren Flanschen in Fig.8b.

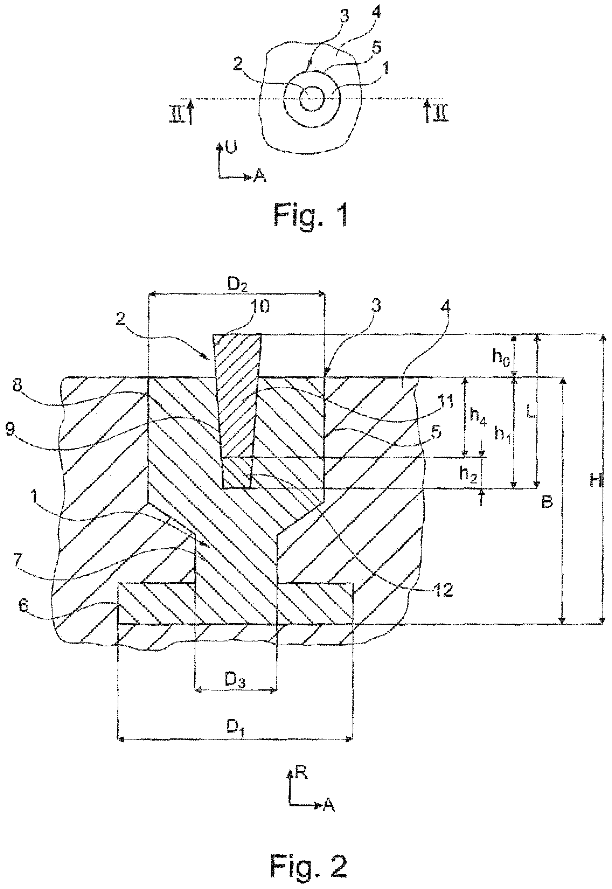

Die Figuren 1 und 2 zeigen einen Ausschnitt eines Laufstreifenprofils 4 eines Spikereifens für Personenkraftwagen (PKW) herkömmlicher Art mit Spikelöchern 5 bekannter Art, von denen lediglich eines dargestellt ist. Der Spikereifen ist ein Fahrzeugluftreifen radialer Bauart. Wie den Figuren 1 und 2 zu entnehmen ist in das Spikeloch 5 jeweils ein Spike 3 eingebracht und formschlüssig gehalten. Der Spike 3 ist dabei in bekannter Weise aus einem Spikekörper 1 und einem Spikepin 2 ausgebildet. Der Spike 3 ist beispielsweise - wie in den Figuren 1 und 2 dargestellt - mit rotationssymmetrischer Geometrie ausgebildet. Der Spikekörper 1 ist mit einem Oberflansch 8, einem Fußflansch 6 und mit einem die beiden verbindenden Mittelteil 7 ausgebildet. Im Oberflansch 8 ist der Spikepin 2 verankert. Der Oberflansch 8 und der Fußflansch 6 sind im Wesentlichen mit einer zylindrischen Mantelfläche ausgebildet. Der Fußflansch 6 ist mit einem Außendurchmesser D₁ und der Oberflansch 8 mit einem Außendurchmesser D₂ ausgebildet. Der den Oberflansch 8 mit dem Fußflansch 6 verbindende Mittelteil 7 ist in dem in Figur 2 dargestellten Ausführungsbeispiel mit einem unteren Erstreckungsabschnitt im Reifen, in welchem er im Wesentlichen zylindrisch mit einem Außendurchmesser D₃ ausgebildet ist, und mit einem anschließenden oberen Erstreckungsabschnitt ausgebildet, welcher sich konusartig von dem Durchmesser D₃ des unteren Teiles nach oben hin bis zum Durchmesser D₂ des Oberflansches 8 hin erweitert.

Die Durchmesser D₁, D₂ und D₃ sind mit D₁ > D₂ > D₃ ausgebildet.
In der im Reifen nach radial außen hin weisenden Stirnfläche des Oberflansches 8 und somit des Spikekörpers 1 ist eine konische Öffnung 9 (Pinloch), welche konzentrisch zum oberen Flansch 8 angeordnet ist und sich von der Stirnfläche des Spikekörpers 1 nach radial innen im Reifen hin verjüngt, ausgebildet, in welche der in seiner äußeren Mantelfläche korrespondierend konisch verjüngt ausgebildete Spikepin 2 eingepresst ist.

Der Spikekörper 1 erstreckt sich in radialer Richtung R des Fahrzeugluftreifens, ausgehend von der radial äußeren Oberfläche des Laufstreifenprofils 4 nach innen über eine Erstreckungshöhe B. Der Spikepin 2 ist längs seiner Haupterstreckung, d. h. im eingesetzten Zustand am Fahrzeugreifen, in radialer Richtung R des Reifens mit einer Erstreckungshöhe L ausgebildet. Der Spikepin 2 erstreckt sich längs seiner Haupterstreckungsrichtung von einer Position im Abstand h₀ oberhalb der den Oberflansch 8 und den Spikekörper 1 begrenzenden Stirnfläche, sowie oberhalb des Spikelochs 5 und der Laufstreifenoberfläche 4 über die Erstreckungslänge L bis in den Spikekörper 1 hinein und endet dort. Dabei erstreckt sich der Spikepin 2 längs seiner Haupterstreckungsrichtung ausgehend von der nach obenhin den Spikekörper 1 begrenzenden Stirnfläche - und im eingesetzten Zustand am Fahrzeugreifen von der Laufstreifenoberfläche 4 - über eine die Einbettungslänge bildende Erstreckungslänge h₁ bis in den Spikekörper 1 hinein. Die Einbettungslänge h₁ ist mit (0,7 L) ≤ h₁ ≤ (0,9 L) ausgebildet. In den bevorzugten Reifenausbildungen ist die Einbettungslänge h₁ mit (0,75 L) ≤ h₁ ≤ (0,85 L) ausgebildet.

Der Spikepin 2 bildet in seinem Erstreckungsabschnitt oberhalb des Oberflansches 8 und somit oberhalb der Laufstreifenoberfläche 4 den Spikekopf 10. Der Spikepin 2 ist im dargestellten Ausführungsbeispiel über seine gesamte Erstreckungslänge L von oben nach unten hin - und somit im eingebauten Zustand im Reifen längs seiner Erstreckung in radialer Richtung R des Fahrzeugreifens von außen nach innen - mit einer konisch verjüngten Mantelfläche ausgebildet. Der Spikepin 2 ist längs seiner Erstreckungsrichtung von unten nach oben hin mit einem unteren Erstreckungsabschnitt 12 der Erstreckungshöhe h₂ und mit einem nach oben hin unmittelbar anschließenden oberen Erstreckungsabschnitt 11 der Erstreckungshöhe (L-h₂) ausgebildet, welche größer ist als die Ersreckungshöhe h₀ ist. Der obere Erstreckungsbereich 11 des Spikepins 2 erstreckt sich somit von einer Position, welche unterhalb der den Oberflansch 8 und somit den Spikekörper 1 nach oben hin begrenzten Stirnseite und somit im Reifen radial innerhalb der Laufstreifenoberfläche angeordnet ist, nach außen und zwar zunächst über eine Erstreckungshöhe (h₁ - h₂) durch den oberen Erstreckungsbereich des Oberflansches 8 und dann über die gesamte Ersreckungshöhe h₀ der Spikespitze 10 hinweg.

Der Spikepin 2 ist dabei in seinem oberen Erstreckungsbereich 11 aus einem ersten pulvermetallurgisch hergestellten, gesinterten Material und in seinem unteren Erstreckungsabschnitts 12 aus einem zweiten pulvermetallurgisch hergestellten, gesinterten Material ausgebildet, wobei das Material des oberen Erstreckungsabschnitts 11 eine höhere Abriebfestigkeit und eine höhere Dichte aufweist als das Material des unteren Erstreckungsabschnitts 12.

Zur Herstellung wurden beispielsweise beide Erstreckungsabschnitte 11 und 12 jeweils pulvermetallurgisch hergestellt, gepresst und zusammengesintert. Hierzu wird zum Beispiel das Spikepinwerkzeug zuerst mit einer bestimmten Menge an pressfähigem, pulvermetallurgischem Material zur Erzeugung einer der beiden Schichten gefüllt. Danach wird das Spikepinwerkzeug mit pressfähigem, pulvermetallurgischem Material zur Erzeugung der anderen der beiden Schichten gefüllt. Im anschließenden Pressvorgang pressen die Pressstempel die Pulverschichten zusammen und ein "grüner" ungesinterter Spikepin aus zwei verschiedenen Materialschichten ist entstanden. Danach werden die Spikepins in einem Sintervorgang, der im Wesentlichen dem Sintervorgang von konventionellen Spikepins entspricht, gesintert.

Das Material des oberen Erstreckungsabschnitts 11 ist beispielsweise ein pulvermetallurgisch hergestelltes Hartmetall bekannter Art, welches eine Abriebfestigkeit von 60 bis 105 Rs und eine Dichte von 10 bis 17 g/cm³ aufweist. Das Hartmetall des oberen Erstreckungsabschnitts 11 ist pulvermetallurgisch hergestellt mit 60 bis 90 Gewichtsprozent Wolframcarbid (WC), 6 bis 15 Gewichtsprozent Kobalt (Co), 0 bis 30 Gewichtsprozent Titancarbid (TiC), 0 bis 5% Talliumcarbid (TaC), 0 bis 5 Gewichtsprozent Niobcarbid (NbC), 0 bis 30 Gewichtsprozent Titan-Wolframcarbid (TiWC), 0 bis 15Gewichtsprozent Nickel (Ni) und 0 bis 15 Gewichtsprozent Molybden (Mo). Die Gewichtsprozente sind dabei Gewichtsprozente des fertigen Hartmetalls. Das Hartmetall des oberen Erstreckungsabschnitts 11 ist mit einem Young's modulus von 100 bis 400 GPa ausgebildet. Das Hartmetall des oberen Erstreckungsabschnitts 11 ist mit einer Härte von 1200 bis 1700 Hv30 (Hardness Vickers 30), mit einer Biegefestigkeit von 1500 bis 4000 N/mm² und mit eine Porosität A00-08,B00-08,C00-08 gemäß ISO-Norm 4505 vom 01.08.1978 ausgebildet.

Die Bestimmung der RS-Werte für die Abriebfestigkeit erfolgt analog der Testmethode nach ASTM B611-85 (Standard Testmethod for abrasive wear resistance of cemented carbids - reappeared 2005), wobei jedoch das Gewicht (weight) mit 27,2 kg anstelle von 10 kg genommen und die die Messung mit 300 Umdrehungen anstelle von 1000 durchgeführt wird. Dabei wird die Tiefe der vier tiefsten Abriebwerte werden gemessen und gemittelt. Das Ergebnis wird mit 100 multipliziert und ergibt den RS-Wert. Der RS-Wert gibt somit die Tiefe der im Test herausgeschliffenen Kalotte an und dient als Maß für die Abriebfestigkeit. Je höher der RS-Wert ist, desto geringer ist die Abriebfestigkeit.

Das im unteren Erstreckungsbereich 12 ist beispielsweise ein pulvermetallurgisch hergestelltes Hartmetall bekannter Art, welches eine Abriebfestigkeit von 95 bis 200 Rs , die jedoch geringer als die Abriebfestigkeit des Hartmetalls des oberen Erstreckungsbereichs 11 ist, und eine Dichte von 5 bis 10 g/cm³, die jedoch kleiner als die Dichte des Hartmetalls des oberen Erstreckungsbereiches 12 ist, aufweist. Das Hartmetall des unteren Erstreckungsabschnitts 12 ist pulvermetallurgisch hergestellt mit 0 bis 50 Gewichtsprozent Wolframcarbid (WC), 0 bis 15 Gewichtsprozent Kobalt (Co), 25 bis 85 Gewichtsprozent Titancarbid (TiC), 0 bis 5 Gewichtsprozent Talliumcarbid (TaC), 0 bis 5 Gewichtsprozent Niobcarbid (NbC), 15 bis 60% Titan-Wolframcarbid (TiWC), 0 bis 20 Gesichtsprozent Nickel (Ni) und 0 bis 15 Gewichtsprozent Molybden (Mo) Die Gewichtsprozente sind dabei Gewichtsprozente des fertigen Hartmetalls.. Das Hartmetall des unteren Erstreckungsabschnitts 12 ist mit einer Härte von 1000 bis 1350 Hv30, mit einer Biegefestigkeit von 1500 bis 4000 N/mm² und mit eine Porosität A00-08,B00-08,C00-08 gemäß ISO-Norm 4505 vom 01.08.1978 ausgebildet. Das Hartmetall des unteren Erstreckungsabschnitts 12 ist mit einem Young's modulus von 100 bis 400 GPa ausgebildet.

Die Erstreckungslänge L der Spikepins 2 ist mit 4,8 ≤ L ≤ 8,5 mm ausgebildet. In den üblichen Einsätzen wird eine Erstreckungslänge L mit 5,8 ≤ L ≤ 7,2 mm gewählt. Die Erstreckungshöhe h₂ des unteren Erstreckungsabschnitts 12 ist mit (0,1 L) ≤ h₂ ≤ (0,65 L) ausgebildet. In der üblichen Ausführung von Spikereifen ist eine Erstreckungshöhe h₂ ≤ (0,5 L) ausgebildet.

In einem Ausführungsbeispiel, welches in Fig. 2 dargestellt ist, ist beispielsweise die Erstreckungslänge L mit L= 6,5 mm, die Höhe h₀ mit 1mm ≤ h₀ ≤ 2 mm, die Höhe h₁ mit 5,5 mm ≥ h₁ ≥ 4,5 mm und die Höhe h₂ mit 1mm ≤ h₂ ≤ 2,5 mm ausgebildet. Die Höhen h₁ und h₂ sind dabei darüber hinaus mit 0,85 L ≥ h₁ ≥ 0,69 L sowie mit 0,15 L ≤ h₂ ≤ 0,38 L ausgebildet.

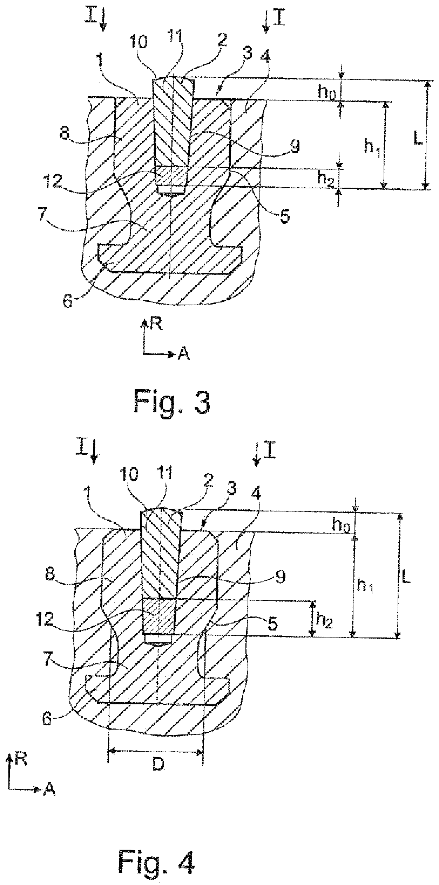

Figur 4 zeigt ein Ausführungsbeispiel eines Spikes 3 mit Spikekörper 1 und Spikepin 2, bei welchem der Spikepin 2 besonders lang ausgebildet ist und sich bis in den Erstreckungsbereich mit dem Erstreckungsabschnitt 7 des Spikekörpers 1 hinein erstreckt. Bei dem Ausführungsbeispiel ist beispielsweise die Erstreckungslänge L des Spikepins 2 mit L= 8,5 mm, die Höhe h₁ mit 7,5 mm ≥ h₁ ≥ 6,5 mm, die Höhe h₀ mit 1 mm ≤ h₀ ≤ 2mm und die Höhe h₂ mit 1 mm ≤ h₂ ≤ 4 mm gewählt ausgebildet. Die Höhen h₁ und h₂ sind darüber hinaus mit 0,88 L ≥ h₁ ≥ 0,75 L und 0,12 L ≤ h₂ ≤ 0,5 L ausgebildet.

In einer besonders kurz ausgebildeten, nicht dargestellten Ausführung ist die die Erstreckungslänge L des Spikepins 2 mit L= 4,8 mm, die Höhe h₀ mit h₀= 1 mm, die Höhe h₁ mit h₁= 3,8 mm und die Höhe h₂ mit 1 mm ≤ h₂ ≤ 2 mm ausgebildet. Die Höhen h₁ und h₂ sind darüber hinaus mit h₁= 0,8 L und mit 0,21 L ≤ h₂ ≤ 0,42 L gewählt ausgebildet.

Figur 3 zeigt eine weitere Ausführung der Kontur der Mantelfläche des mittleren Erstreckungsabschnitts 7 des Spikekörpers 1 mit einem vom Fußflansch 6 zum Oberflansch 8 hin progressiv zunehmenden Durchmesser D₃.

Die Figuren 1, 3 und 4 zeigen Ausführungen, bei denen der Spikekörper 1 jeweils mit zwei Flanschen, 6 und 8 ausgebildet ist.

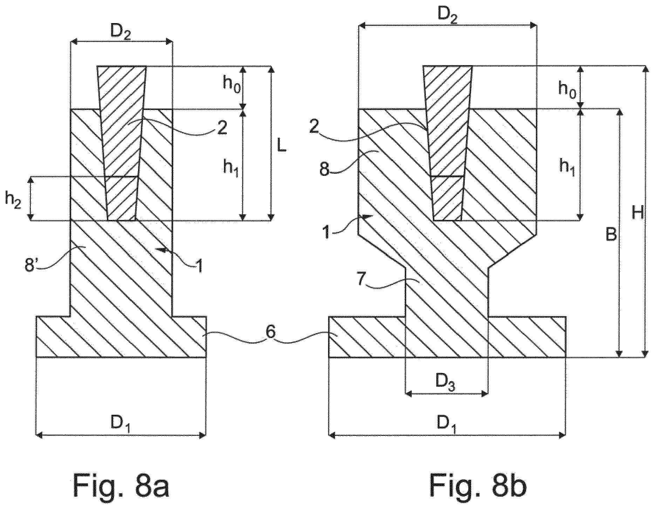

Wie Figur 8b entnommen werden kann, ist ein derartiger Spikekörper 1 beispielsweise - wie bereits in den Figuren 1, 3 und 4 dargestellt - als Ausführung mit einem Fußflansch 6, mit einem Oberflansch 8 und mit einem Mittelteil 7 ausgebildet.

Figur 8a zeigt eine alternative Ausbildung, bei der ein derartiger Spikekörper 1 lediglich mit einem Fußflansch 6 des Außendurchmessers D₁ und ledigliche einem darüber angeordneten, mit zylindrischer Mantelfläche ausgebildeten oberen Spikekörperabschnitt 8 ausgebildet ist. Bei diesem Ausführungsbeispiel ist die Aufnahmeöffnung 9 zur Aufnahme des Spikepins 2 innerhalb dieses oberen Erstreckungsabschnitt 8 des Spikekörpers 1 ausgebildet. Der Spikepin 2 ist wie im Zusammenhang mit den Figuren 1 und 3 erläutert ausgebildet. In dieser Ausführung ist beispielsweise eine Erstreckungslänge L des Spikepins mit L= 6 mm, die Höhe h₀ mit 1 mm ≤ h₀ ≤ 2 mm, die Höhe h₁ mit 5 mm ≥ h₁ ≥ 4,0 mm und die Höhe h₂ mit 1 mm ≤ h₂ ≤ 2,5 mm ausgebildet. Außerdem ist die Höhe h₁ mit 0,83 L ≥ h₁ ≥ 0,66 L und die Höhe h₂ mit 0,16 L ≤ h₂ ≤ 0,42 L ausgebildet. Diese Ausbildung eignet sich besonders für die Ausbildung von kostengünstigen Spikes.

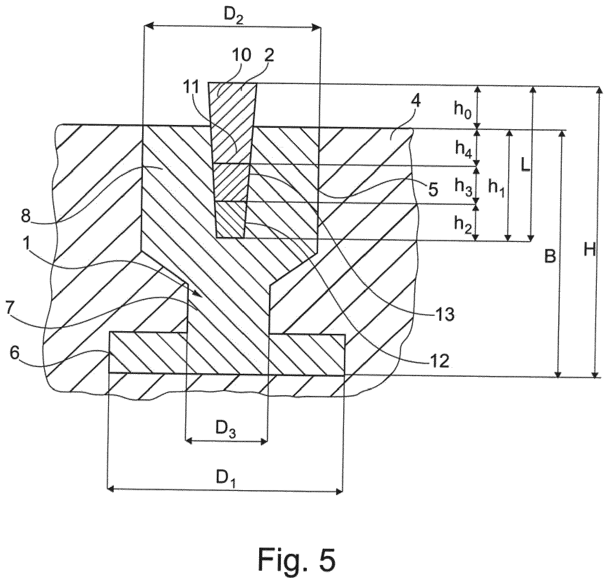

Figur 5 zeigt eine erfindungsgemäße Ausführungsform, bei der der Spikepin 2 zwischen seinem unteren Erstreckungsabschnitt 12 der Erstreckungshöhe h₂ und dem oberen Erstreckungsabschnitt 11 mit einem dritten, mittleren Erstreckungsabschnitt 13 der Erstreckungshöhe h₃ ausgebildet ist. Für die Erstreckungshöhen h₃ und h₂ gilt 0,1 L ≤ h₂ ≤ 0,5 L und 0,05 L ≤ h₃ ≤ 0,45 L. In den gängigen Ausführungen von Reifen mit Spikes ist eine Ausbildung von 0,07 L ≤ h₃ ≤ 0,3 L und 0,12 L ≤ h₂ ≤ 0,35 L ausgebildet. Die Einbettungslänge h₁ ist mit 0,65 L ≤ h₁ ≤ 0,9 L ausgebildet, wobei in den gängigen Spikereifen die Einbettungslänge h₁ mit 0,75 L ≤ h₁ ≤ 0,85 L ausgebildet wird. Der mittlere Erstreckungsbereich 13 ist in diesem Ausführungsbeispiel ebenfalls ein aus einem pulvermetallurgischen Material hergestelltes und gesintertes Hartmetall. Das Hartmetall des mittleren Erstreckungsbereichs 13 ist beispielsweise ein pulvermetallurgisch hergestelltes Hartmetall bekannter Art, welches eine Abriebfestigkeit von 80 bis 110 RS , die jedoch kleiner als die Abriebfestigkeit des Hartmetalls des oberen Erstreckungsbereichs 11 und größer als die Abriebfestigkeit des unteren Erstreckungsbereiches 12 ist, und eine Dichte von 8 bis 12 g/cm³, die jedoch kleiner als die Dichte des Hartmetalls des oberen Erstreckungsbereiches 11 und größer als die Dichte des Hartmetalls des unteren Erstreckungsbereiches 12 ist, aufweist. Das Hartmetall des mittleren Erstreckungsabschnitts 13 ist pulvermetallurgisch hergestellt mit 20 bis 60 Gewichtsprozent Wolframcarbid (WC), 0 bis 15 Gewichtsprozent Kobalt (Co), 8 bis 70 Gewichtsprozent Titancarbid (TiC), 0 bis 5 Gewichtsprozent Talliumcarbid (TaC), 0 bis 5 Gewichtsprozent Niobcarbid (NbC), 10 bis 60% Titan-Wolframcarbid (TiWC), 0 bis 20 Gesichtsprozent Nickel (Ni) und 0 bis 15 Gewichtsprozent Molybden (Mo). Die Gewichtsprozente sind dabei Gewichtsprozente des fertigen Hartmetalls.. Das Hartmetall des mittleren Erstreckungsabschnitts 13 ist mit einer Härte von 1100 bis 1600 Hv30, mit einer Biegefestigkeit von 1500 bis 4000 N/mm² und mit eine Porosität A00-08,
B00-08, C00-08 gemäß ISO-Norm 4505 vom 01.08.1978 ausgebildet. Das Hartmetall des mittleren Erstreckungsabschnitts 13 ist mit einem Young's modulus von 100 bis 400 GPa ausgebildet.

Der obere Erstreckungsbereichs 11 und der untere Erstreckungsbereichs 12 sind jeweils aus den - wie in den bereits beschrieben Ausführungsbeispielen zu Figur 1 bis 3 für den oberen Erstreckungsbereich 11 bzw. für den unteren Erstreckungbereich 12 beschriebenen - Materialien ausgebildet. Die Materialien werden dabei pulvermetallurgisch hergestellt, gepresst und zusammengesintert. Das Material des mittleren Erstreckungsabschnitts 13 weist eine geringere Dichte auf als das Material des Erstreckungsabschnitts 11 und eine höhere Dichte als das Material des Erstreckungsabschnitts 12. Das Material weist beispielsweise eine Dichte von 10 g/cm³ und eine Abriebfestigkeit von 105 RS auf.

An einem in Figur 5 dargestellten Ausführungsbeispiels mit Oberflansch 8 und Fußflansch 6 sowie mit Mittelteil 7 des Stützkörpers 1 sind die Werte für L beispielsweise mit L= 6,5 mm, für h₀ mit 1 mm ≤ h₀ ≤ 2,0 mm, für h₁ mit 5,5 mm ≥ h₁ ≥ 4,5 mm, für h₃ mit 0,5mm ≤ h₃ ≤ 2mm und für h₂ mit 1mm ≤ h₂ ≤ 2 mm gewählt. Weiterhin ist h₁ mit 0,85L ≥ h₁ ≥ 0,69L und h₃ mit 0,07L ≤ h₂ ≤ 0,3L sowie h₂ mit 0,15L ≤ h₃ ≤ 0,38L gewählt.

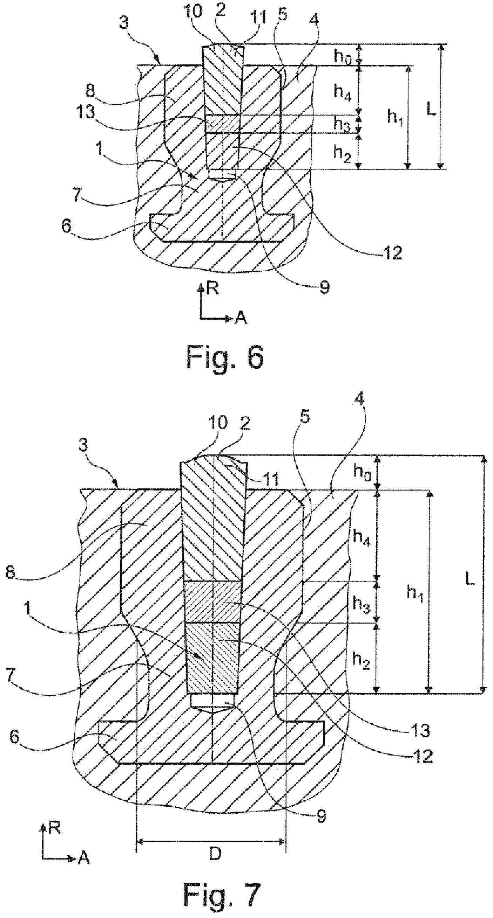

Figur 7 zeigt eine erfindungsgemäße Ausbildung mit besonders langem Spikepin 2, bei dem die Erstreckungslänge L mit L= 8,5 mm, h₀ mit 1 mm ≤ h₀ ≤ 1,2 mm, h₁ mit 7,5 mm ≥ h₁≥ 6,5 mm, h₂ mit 1 mm ≤ h₂ ≤ 4 mm und h₃ mit 0,5 mm ≤ h₃ < 2,5 mm ausgebildet ist. Außerdem ist h₁ mit 0,88 L ≥ h₁ ≥ 0,75 L sowie h₃ mit 0,05 L ≤ h₃ ≤ 0,36 L und h₂ mit 0,11 L ≤ h₂ ≤ 0,5 L ausgebildet. In einer nicht dargestellten, besonders kurz ausgebildeten Variante ist die Erstreckungslänge L mit L= 4,8 mm, h₀ mit h₀= 1 mm, h₁ mit h₁= 3,8 mm, h₃ mit 0,5 mm ≤ h₃ ≤ 1 mm und h₂ mit 1 mm ≤ h₂ ≤ 2 mm ausgebildet. Außerdem ist h₁ mit h₁= 0,8 L, h₃ mit 0,1 L ≤ h₃ ≤ 0,21 L sowie h₂ mit 0,21 L ≤ h₂ ≤ 0,42 L ausgebildet.

Bei einer erfindungsgemäßen Ausbildung mit einem Spikekörper 1 gemäß Figur 6 ist die Erstreckungslänge L beispielsweise mit L= 6 mm, h₀ mit 1 mm ≤ h₀ ≤ 2 mm, h₁ mit 5,5 mm ≥ h₁ ≥ 4,0 mm, h₃ mit 0,5 mm ≤ h₃ ≤ 1,5 mm und h₂ mit 1 mm ≤ h₂ ≤ 2,5 mm ausgebildet. Außerdem ist h₁ mit 0,83 L ≥ h₁ ≥ 0,66 L, h₃ mit 0,08 L ≤ h₃ ≤ 0,25 L sowie h₂ mit 0,16 L ≤ h₂ ≤ 0,42 L ausgebildet. Figur 6 zeigt eine Ausführung eines derartigen Spikes mit mittleren Erstreckungsabschnitt 13 des Spikepins2 , bei dem der Spikekörper - wie in Figur 4 dargestellt - mit längs seiner Erstreckung zum oberen Flansch hin progressiv zunehmendem Außendurchmesser D ausgebildet ist.

Der Spikekörper 1 und der Spikepin 2 wurde in den bisherigen erläuterten Ausführungen rotationssymmetrisch beschrieben und in Figur 1 dargestellt. In nicht dargestellten Ausführungen ist der Spikepin 2 jedoch jeweils über zumindest einen Teilbereich seiner Erstreckung, z.B. über den Bereich der Spikespitze 10 nicht rotationssymmetrisch, sondern - in der in Figur 1 dargestellten Draufsicht von oben betrachtet - mit rechteckiger, ovaler, rautenförmiger, dreieckförmiger, sternförmiger oder sonstiger Außenkontur bekannter Art ausgebildet.

In einer nicht dargestellten Ausführung ist der Spikepin 2 längs seiner gesamten Erstreckung im Spikekörper 1 nicht rotationssymmetrisch, sondern mit seiner Außenkontur beispielsweise in der Draufsicht von oben in seinen Schnittebenen oval, rechteckig, dreieckig, elliptisch oder sternförmig, wobei wie in den oben beschriebenen Ausführungen der Spikepin 2 auch bei diesen Ausführungen sich innerhalb des Spikekörpers 1 nach unten hin in seiner Querschnittgröße zumindest abschnittsweise, d.h. zumindest über einen Teilabschnitt ihrer Erstreckung kontinuierlich verjüngt. Die Querschnitte werden dabei senkrecht zur Längserstreckungsrichtung des Spikepins 2, d. h. im Reifen in radialer Richtung R des Reifens nach innen hin gemessen.

In einer nicht dargestellten Ausführungsform ist der Spikekörper 1 an seinen Außenflächen in Bereich der Flansche 6 bzw. 8 zumindest teilweise unrund, beispielsweise ellyptisch, oval oder rechteckig mit abgerundeten Ecken ausgebildet. Die Querschnitte werden dabei senkrecht zur Längserstreckungsrichtung des Spikepins 2, d. h. im Reifen in radialer Richtung R des Reifens nach innen hin gemessen.

### Bezugszeichenliste

### (Teil der Beschreibung)

- 1: Spikekörper
- 2: Spikepin
- 3: Spike
- 4: Laufstreifenprofil
- 5: Spikeloch
- 6: Fußflansch
- 7: Mittenteil
- 8: Oberflansch
- 9: Aufnahmeöffnung
- 10: Spikekopf
- 11: Oberer Erstreckungsbereich
- 12: Unterer Erstreckungsbereich
- 13: Dritter Erstreckungsbereich

## Patentansprüche

1. Spike, welcher in ein Spikeloch (5) im Laufstreifen eines Fahrzeugluftreifens eingebracht wird, und einen im Spikeloch (5) gehaltenen und über das Spikeloch (5) bzw. die Laufstreifenoberfläche vorstehenden Spikepin (2) aufweist, wobei der Spikepin (2) längs seiner Erstreckung aus wenigstens einem oberen, die Spikespitze (10) bildenden Erstreckungsbereich (11), welcher zumindest den über das Spikeloch (5) bzw. die Laufstreifenoberfläche vorstehenden Teil des Spikepins umfasst, und aus einem unteren Erstreckungsbereich (12) besteht, wobei der Spikepin (2) im oberen Erstreckungsbereich (11) aus einem ersten, pulvermetallurgisch hergestellten oder gesinterten Material und im unteren Erstreckungsbereich (12) aus einem zweiten pulvermetallurgisch hergestellten oder gesinterten Material besteht, wobei das erste Material eine höhere Abriebfestigkeit und eine höhere Dichte aufweist als das zweite Material,
**dadurch gekennzeichnet,**
**dass** der Spikepin (2) zwischen dem oberen (11) und dem unteren (12) Erstreckungsbereich einen dritten (13) Erstreckungsbereich aufweist, in welchem der Spikepin (2) aus einem dritten Material besteht, welches eine geringere Dichte aufweist als das erste Material und eine höhere Dichte als das zweite Material.

2. Spike gemäß den Merkmalen von Anspruch 1,
welcher einen im Spikeloch (5) gehaltenen Spikekörper (1) mit einem Oberflansch (8), einem Fußflansch (6) und einem den Oberflansch (8) mit dem Fußflansch (6) verbindenden - insbesondere taillierten - Mittelteil (7) aufweist, in welchem der Spikepin (2) angeordnet ist.

3. Spike gemäß den Merkmalen von Anspruch 1 oder 2,
wobei der zweite Erstreckungsabschnitt (12) mit einer Erstreckungshöhe h₂ mit (0,10L)≤h₂≤(0,65L) - insbesondere mit h₂≤(0,5L) - ausgebildet ist, wobei L die Erstreckungshöhe des Spikepins (2) ist.

4. Spike gemäß den Merkmalen von einem oder mehreren der vorangegangenen Ansprüche,
wobei das erste Material und das zweite Material innig - insbesondere pulvermetallurgisch oder sintertechnisch - miteinander verbunden sind.

5. Spike gemäß den Merkmalen von Anspruch 1,
wobei der dritte Erstreckungsbereich (13) mit einer Erstreckungshöhe h₃ und der zweite Erstreckungsabschnitt (12) mit einer Erstreckungshöhe h₂ mit h₃ ≤ h₂ ausgebildet ist.

6. Spike gemäß den Merkmalen von einem oder mehreren der vorangegangenen Ansprüche,
wobei der Spikepin (2) zur Einbettung im Reifen mit einer längs der Erstreckungshöhe gemessenen Einbettungslänge h₁ mit (0,65 L)≤h₁≤ (0,9 L) - insbesondere mit (0,75 L)≤h₁≤ (0,85 L) - ausgebildet ist.

7. Fahrzeugluftreifen mit einem Laufstreifen, in welchem Spikes (1) gemäß einem oder mehreren der vorangegangenen Ansprüche verankert sind.

## Claims

1. Spike which is inserted into a spike hole (5) in the tread of a pneumatic vehicle tyre and which has a spike pin (2) which is held in the spike hole (5) and which projects beyond the spike hole (5) and the tread surface,
wherein the spike pin (2) is composed, along its extent, of at least an upper extent region (11), which forms the spike tip (10) and which comprises at least that part of the spike pin which projects beyond the spike hole (5) and the tread surface, and of a lower extent region (12), wherein the spike pin (2) is, in the upper extent region (11), composed of a first material produced or sintered by powder metallurgy and, in the lower extent region (12), is composed of a second material produced or sintered by powder metallurgy, wherein the first material exhibits a greater wear resistance and a higher density than the second material,
**characterized**
**in that** the spike pin (2) has, between the upper (11) and the lower (12) extent region, a third (13) extent region in which the spike pin (2) is composed of a third material which has a lower density than the first material and a higher density than the second material.

2. Spike according to the features of Claim 1,
which spike has a spike body (1) which is held in the spike hole (5) and which has an upper flange (8), a base flange (6) and an - in particular waisted - middle part (7) which connects the upper flange (8) to the base flange (6), in which spike body the spike pin (2) is arranged.

3. Spike according to the features of Claim 1 or 2,
wherein the second extent section (12) is formed with an extent height h₂, where (0.10L)≤h₂≤(0.65L), in particular h₂≤(0.5L), wherein L is the extent height of the spike pin (2).

4. Spike according to the features of one or more of the preceding claims,
wherein the first material and the second material are closely connected to one another, in particular by powder metallurgy or by sintering.

5. Spike according to the features of Claim 1,
wherein the third extent region (13) is formed with an extent height h₃ and the second extent section (12) is formed with an extent height h₂,
where h₃ ≤ h₂.

6. Spike according to the features of one or more of the preceding claims,
wherein the spike pin (2) is designed for being embedded in the tyre with an embedding length h₁, measured along the extent height, where (0.65L)≤h₁≤(0.9L), in particular (0.75L)≤h₁≤(0.85L).

7. Pneumatic vehicle tyre having a tread in which spikes (1) according to one or more of the preceding claims are anchored.

## Revendications

1. Crampon, qui est introduit dans un trou de crampon (5) dans la bande de roulement d'un pneumatique de véhicule, et qui présente une tige de crampon (2) maintenue dans le trou de crampon (5) et saillante au-dessus du trou de crampon (5) ou de la surface de la bande de roulement, dans lequel la tige de crampon (2) se compose le long de son extension d'au moins une région d'extension supérieure (11) formant la pointe de crampon (10), qui comprend au moins la partie de la tige de crampon saillante au-dessus du trou de crampon (5) ou de la surface de la bande de roulement, et d'une région d'extension inférieure (12), dans lequel la tige de crampon (2) se compose dans la région d'extension supérieure (11) d'un premier matériau fabriqué par la métallurgie des poudres ou fritté et dans la région d'extension inférieure (12) d'un deuxième matériau fabriqué par la métallurgie des poudres ou fritté, dans lequel le premier matériau présente une plus haute résistance à l'abrasion et une densité plus élevée que le deuxième matériau, **caractérisé en ce que** la tige de crampon (2) présente entre la région d'extension supérieure (11) et inférieure (12) une troisième région d'extension (13), dans laquelle la tige de crampon (2) se compose d'un troisième matériau, qui présente une densité plus faible que le premier matériau et une densité plus élevée que le deuxième matériau.

2. Crampon selon les caractéristiques de la revendication 1, qui présente un corps de crampon (1) maintenu dans le trou de crampon (5) avec une aile supérieure (8), une aile inférieure (6) et une partie médiane (7) - en particulier resserrée - reliant l'aile supérieure (8) à l'aile inférieure (6), dans lequel la tige de crampon (2) est disposée.

3. Crampon selon les caractéristiques de la revendication 1 ou 2, dans lequel la deuxième partie d'extension (12) est réalisée avec une hauteur d'extension h₂ telle que (0,10L) ≤ h₂ ≤ (0,65L) - en particulier avec h₂ ≤ (0,5L), dans lequel L est la hauteur d'extension de la tige de crampon (2).

4. Crampon selon les caractéristiques d'une ou de plusieurs des revendications précédentes, dans lequel le premier matériau et le deuxième matériau sont intimement unis l'un à l'autre - en particulier par la métallurgie des poudres ou par une technique de frittage.

5. Crampon selon les caractéristiques de la revendication 1, dans lequel la troisième région d'extension (13) est réalisée avec une hauteur d'extension h₃ et la deuxième partie d'extension (12) est réalisée avec une hauteur d'extension h₂, avec h₃ ≤ h₂.

6. Crampon selon les caractéristiques d'une ou de plusieurs des revendications précédentes, dans lequel la tige de crampon (2) est formée, en vue de son enrobage dans le pneumatique, avec une longueur d'enrobage h₁ mesurée le long de la hauteur d'extension pour laquelle (0,65L) ≤ h₁ ≤ (0,9L) - en particulier avec (0,75L) ≤ h₁ ≤ (0,85L).

7. Pneumatique de véhicule avec une bande de roulement, dans laquelle des crampons (1) selon une ou plusieurs des revendications précédentes sont disposés.
